# EUROPÄISCHE PATENTSCHRIFT

(11) **EP 0 671 373 B1**
(45) Veröffentlichungstag und Bekanntmachung des Hinweises auf die Patenterteilung: **13.10.1999**
(21) Anmeldenummer: 93902599.5
(22) Anmeldetag: 28.12.1992
(51) Int. Cl.: C05C 13/00, A01C 23/00, B65D 81/18, C05G 3/00

(54) **VERFAHREN ZUR GEWINNUNG VON MINERALSALZEN UND/ODER DÜNGEMITTEL, IHREN TRANSPORT UND IHRE LAGERUNG**
MEANS FOR OBTAINING MINERAL SALTS AND/OR FERTILIZERS, THEIR TRANSPORTATION AND STORAGE
PROCEDE D'OBTENTION DE SELS MINERAUX ET/OU D'ENGRAIS, LEUR TRANSPORT ET LEUR STOCKAGE

(30) Priorität: 24.09.1992 RU 5057974; 09.12.1992 RU 920084
(43) Veröffentlichungstag der Anmeldung: 13.09.1995
(73) Patentinhaber: NAUCHNO-INZHENERNY TSENTR "INFOMIR", Odessa, 270011 (UA)
(72) Erfinder: ANDREEV, Alexandr Anatolievich, Odessa, 270111 (UA); BUKOVSKY, Vyacheslav Evgenievich, Odessa, 270113 (UA)
(74) Vertreter: von Füner, Alexander, Prof.h.c. Dr.
(86) Internationale Anmeldenummer: RU9200256
(87) Internationale Veröffentlichungsnummer: WO9406729

(56) Entgegenhaltungen:
- DD-A- 215 076
- DE-A- 3 824 744
- FR-A- 2 601 656
- US-A- 4 154 258
- DATABASE WPI Section Ch, Week 8001 Derwent Publications Ltd., London, GB; Class J06, AN 80-01461C & SU-A-658 043 ( BRIM G V) , 26.April 1979

## Beschreibung

Die Erfindung betrifft ein Verfahren zur Herstellung einer Lösung aus einem Mineralsalz, einem Mineraldünger oder einer Mischung daraus, ein System zur Herstellung der Lösung mit einem Reaktor, in dem durch Synthese des Mineralsalzes, des Mineraldüngers oder der Mischung daraus ein Zwischenprodukt in Form eine Trübe erhalten wird, einem Container zum Transport und zur Aufbewahrung des Mineralsalzes, des Mineraldüngers oder der Mischung daraus, einer Umladeeinrichtung und einer Einrichtung zur Zubereitung der Lösung, sowie einen Container zur Verwendung in dem Verfahren.

Es sind ein Verfahren und ein System zur Herstellung von Mineraldüngern, beispielsweise von Karbamid, bekannt (M.E. Pozin "Technologie von Mineraldüngern", 1974, Khimia /Moskau/, S. 249). Die Herstellung des Produktes besteht in der Synthese von Karbamid aus Ammoniak (NH₃) und Kohlendioxid (CO₂) mit nachfolgender Eindampfung, Filtration, Zentrifugierung, Granulation und Behandlung mit einem verbackungsverhindernden Mittel. Das Endprodukt ist granuliertes Karbamid. Jedoch erfordert ein derartiges System einen beträchtlichen Energieaufwand, seine Realisierung ist ökologisch schädlich, und ausserdem enthält auch das hergestellte Produkt selbst erhöhte Konzentrationen von für die menschliche Gesundheit und für die Natur gefährlichen Beimengungen, z.B. Biuret. Daneben gestattet ein solches System es nicht, ein Produkt für dessen weiten Einsatzbereich zu erhalten; es erfordert auch einen wesentlich grösseren ökonomischen Aufwand und übt einen verderblichen Einfluss auf die Umgebung bei der Transportierung, Umladung und Aufbewahrung des Produktes aus.

Bekannt sind ein Verfahren und ein System zur Herstellung von Ammonsalpeter (M.E. Pozin "Technologie von Mineraldüngern", 1974, Khimia /Moskau/, S. 269), die auf der Neutralisation der Salpetersäure durch Ammoniak beruhren. Als Ergebnis der Neutralisation der Salpetersäure bildet sich eine Ammoniumnitratlösung, die zur Herstellung eines festen Produktes verdampft werden muss. Die Menge der Reaktionswärme, die bei der entsprechenden Organisation des Produktionsprozesses frei wird, erweist sich als hinreichend, um die Hauptmasse des mit der Salpertersäure eingeführten Wassers zu verdampfen und eine hochkonzentrierte Lösung zu erhalten. Im bekannten Verfahren zur Herstellung von Ammoniumnitrat erfolgt die Ableitung der Reaktionswärme in dem eigentlichen Neutralisator, wo gleichzeitig mit der Neutralisation das Sieden und Eindampfen der Lösung stattfindet. Die Granulation der Schmelze führt man im Luftstrom in einem Granulationsturm durch. Die erhaltenen Granalien behandelt man mit einem Verbackungsverhinderungsmittel. Ein solches System ist arbeitsintensiv und an die Konzentration des Produktes fest geknüpft, enthält ökologisch schädliche Zusätze. Überdies ist dieses System in den Stadien der Produktion, Transportierung und Aufbewahrung explosionsgefährlich.

Es sind ein Verfahren und ein System zur Herstellung von Kaliumchlorid aus Sylviniten bekannt (M.E. Pozin "Technologie von Mineraldüngern", 1974, Khimia /Moskau/, S. 225), basierend auf der Auslaugung des zerkleinerten Sylvinits durch eine nach der Kristallisation von Kaliumchlorid erhaltene heisse Mutterlösung, wobei aus dem Sylvinit in die Lösung das Kaliumchlorid übergeht, während das Natriumchlorid fast vollständig in der Halde zurückbleibt, auf der Abrennung den heissen Lauge von der Halde, der Abkühlung der Lage, der Kristallisation des Kaliumchlorids und der Abtrennung desselben von der Mutterlösung, auf der Trocknung. Dieses System ist aber umweltfeindlich und ökonomisch teuer in der Produktion, Transportierung und Aufbewahrung. Ein solches System führt zur Entstehung grosser Produktionsrückstände.

Bekannt sind ein Verfahren und ein System zur Versorgung eines Verbrauchers mit Mineralsalzen und/oder -düngern (Oil and gas. January, 28. 1922, No. 55.0) unter Einsatz des Industrietransports, bei denen sämtliche Arbeitsgänge von der Produktion von Mineralsalzen und/oder -düngern bis zur Zustellung derselben an den Verbraucher vereinigt sind. Das Verfahren umfaßt die Herstellung eines festen Produktes in einem Reaktor durch die Synthese des Produktes aus Ausgangskomponenten. Dann erhält man während einer Produktion in einem Behälter einer Einrichtung zur Zubereitung einer Lösung ein Endprodukt in flüssiger Form, das umgeladen und in Spezialcontainern, beispielsweise in Zisternen und Tankern, befördert wird. Im Endstadium ist ein Ablass der Lösung in Behältnisse zur Verwendung derselben durch den Verbraucher vorgesehen.

Bei der Realisierung des bekannten Verfahrens und Anwendung des Systems erhält man ein hinsichtlich der Konzentration fest fixiertes Produkt, beispielsweise eine Lösung von Karbidammonsalpeter (KAS) mit einem erhöhten Gehalt an ökoligisch verunreinigenden Zusätzen, was durch heutzutage genormte technologische Prozesse bedingt ist. Beim Einsatz der Lösung durch den Verbraucher besteht dauernd die Gefahr einer Verschüttung dieser für die menschliche Gesundheit und Umgebung ökologisch schädlichen und aggressiven Flüssigkeit. Dieses System ist ökonomisch unzureichend effektiv, da im Grunde einerseits bei der Herstellung des Endproduktes ausreichend hohe materielle Aufwendungen für seine Produktion erforderlich sind und andererseits eine Flüssigkeit befördert wird, die zu 50% aus Wasser besteht, wobei nur spezialisierte Transportmittel eingesetzt werden. Überdies ist der Produktions- und transportprozess recht langwierig.

Die SU-A-658 043 beschreibt eine Vorrichtung zur Aufbewahrung von kristallisiertem Salz in einem hermetisch abgeschlossenen Raum. Mittels einer Pumpe wird über eine perforierte Rohrleitung eine Salzlösung zugeführt. Die Rohrleitung ist von einem Filterschlauch umgeben. Ein Ende des Filterschlauchs ist mit dem unteren Ende der Rohrleitung und das andere Ende mit einem Schwimmer verbunden. Die Dichte der in dem Raum befindlichen Lösung wird mittels eines Fühlers gemessen.

Der Erfindung liegt die Aufgabe zugrunde, die Möglichkeit zu schaffen, einen einzigen Container zur Kristallisierung und Hydroverdichtung des Mineralsalzes, des Mineraldüngemittels oder der Mischung daraus, sowie zum Transport, zur Aufbewahrung und zur Zubereitung einer Lösung zu verwenden.

Diese Aufgabe wird durch das Verfahren nach Anspruch 1, das System nach Anspruch 2 und den Container nach Anspruch 4 gelöst.

Ein bevorzugte Ausführungsform des System ist Gegenstand des Anspruchs 3. Eine bevorzugter Container besitzt die Merkmale des Anspruchs 5.

Die Verwendung eines einzigen Containers in dem System für die vier verschiedenen Verfahrensschritte hat den Vorteil, daß die Herstellung der Mineralsalz- und/oder Minerladüngerlösung mit wenig Energie und umweltfreundlich durchgeführt werden kann. Darüber hinaus wird dem Verbraucher die Möglichkeit gegeben, die Lösung erst unmittelbar vor ihrer Verwendung herzustellen, wobei er die Konzentration und Dosierung der Lösung nach Belieben wählen kann.

Ein Ausfürhrungsbeispiel der Erfindung wird nachstehend anhand von Zeichnungen näher erläutert. Es zeigt:
- Fig. 1: ein System zur Herstellung einer Lösung eines Mineralsalzes, eines Mineraldüngers oder einer Mischung daraus;
- Fig. 2: ein System zur Zubereitung von flüssigen Düngern und Mineralsalzen;
- Fig. 3: eine Gesamtansicht eines Containers zum Transport und zur Aufbewahrung hydroverdichteter Kristalle;
- Fig. 4: eine Einrichtung zur Zubereitung einer Lösung des Mineralsalzes, des Mineraldüngers oder der Mischung daraus;
- Fig. 5: schematisch den Anschluß von drei Transportcontainern an ein Rohrleitungssystem.

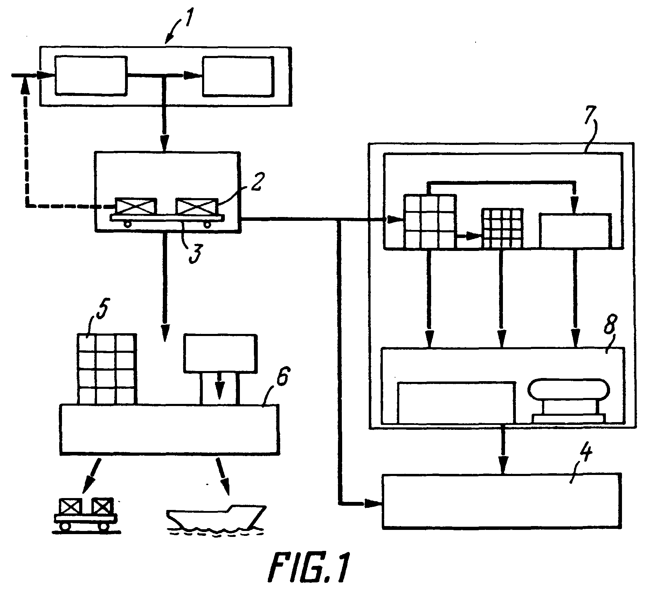

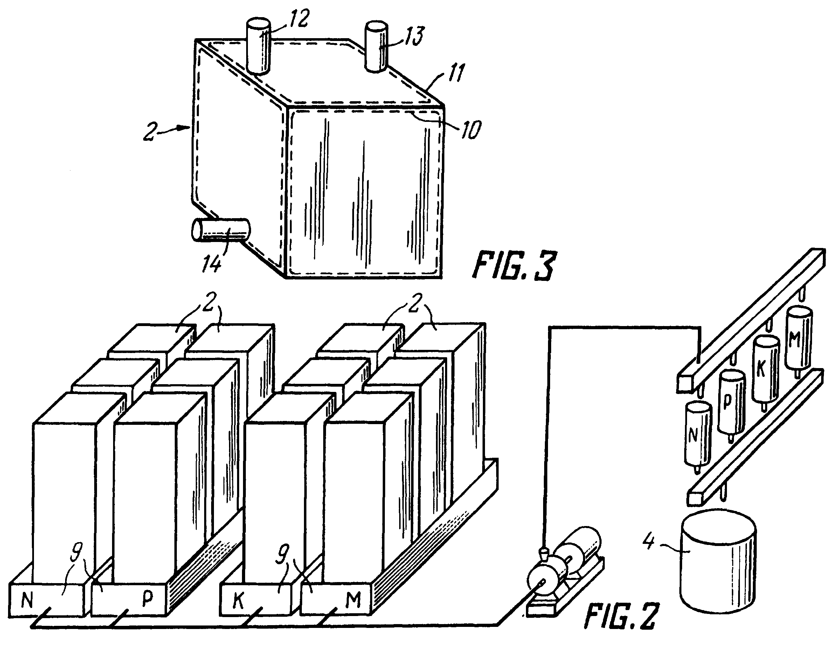

Ein Verfahren zur Herstellung einer Lösung aus einem Mineralsalz, einem Mineraldünger oder einer Mischung daraus, das in dem in Fig. 1 dargestellten System realisiert wird, umfaßt die Herstellung eines festen Produktes aus Ausgangskomponenten durch die Synthese in einem Reaktor 1, wonach man das synthesierte Produkt, erhalten in Form einer Trübe, in einen Container 2 einfüllt, in dem man die Kristallisation unter gleichzeitiger Abtrennung der Mutterlösung durchsführt. Die Mutterlösung verwendet man erneut als Ausgangskomponente für die Herstellung des festen Produktes. Je nach dem Austritt der Mutterlösung aus der Kristallisationszone findet eine Hydroverdichtung der entstandenen Kristalle bis zu einem vorgegebenen Ausmaß statt. Der Container 2 mit den hydroverdichteten Kristallen gelangt entweder zur Aufbewahrung oder zum Laden auf ein Fördermittel 3. In unveränderter Form werden die Container 2 einem Verbraucher 4 zugestellt. Wenn das Produkt in einen stationären Container 5 umgeladen werden muß der bei Umladung der Container 2 auf eine andere Transportmittelart werden sie einer Umladeeinrichtung 6 zugeführt. Je nach dem Bedarf des Verbrauchers 4 an Lösungen von Mineralsalzen und -düngern aus hydroverdichteten Kristallen werden diese Lösungen in einer Einrichtung 7 in einer bestimmten Konzentration und Dosierung in Baugruppen 8 zubereitet. Zur Herstellung komplexer Lösungen von Mineralsalzen und -düngern werden die Container 2 (Fig. 2) mit den erforderlichen Komponenten in Löseblöcken 9 aufgestellt. Durch Wasserzufuhr in die Löseblöcke 9 werden komplexe NPK-Lösungen einer vom Verbraucher 4 vorgegebenen Konzentration und Dosierung erhalten.

Beispiele des erfindungsgemäßen Verfahrens werden nachstehend erläutert:

### Beispiel 1

Die Vorgänge der Synthese und Destillation bei einer existierenden Produktion von Karbamid wurden unverändert gelassen, und nach der Destillation wurde die Trübe abgeleitet und dem Container 2 zugeführt. Die Trübe, die nach dem Destillierapparat eine Konzentration von 72 bis 76% und eine Temperatur von 80°C hat, gelangt in einen Doppelrohrwärmeaustauscher, wo eine Kühlung der Trübe auf eine Temperatur von 55,5°C und eine Übersättigung der Lösung stattfinden. Danach wird die Trübe dem weichen Polypropylen-Container 2 mit einem Polyäthylenmantel zugeführt, welcher eine Ableitung für die Mutterlösung besitzt, wo die Kristallisation des Karbamids und die Abtrennung der Mutterlösung erfolgen. Die Mutterlösung wird in den Produktionsprozess zurückgeführt. Je nach der Abkühlung des Karbamids im Container 2 geht eine Hydroverdichtung von Kristallen vor sich. Das Endprodukt enthält 0,14% Biuret und bin zu 4% Wasser bei der Dichte 1 h/cm².

Die Qualität des Endproduktes ist bei dem erfindungsgemässen Verfahren viel höher als die Qualität eines nach dem bekannten Verfahren hergestellten Produktes (Biuretgehalt 0,14% statt 0,8%), wobei im Produktionsprozess die energieintensivsten Vorgänge wie Verdampfen, Filtration, Zentrifugieren und Granulation wegfallen.

### Beispiel 2

Ähnlich dem Beispiel 1 wurden bei dem Prozess der Produktion von Ammonsalpeter das Verdampfen, Trocknen und die Granulation weggelassen, und die Trübe, die eine Konzentration von 80 bis 82% und eine Temperatur von 92 bis 96°C aufweist, gelangt nach dem Neutralisator in einen Wärmeaustauscher, wo sie sich auf eine Temperatur von 60°C abkühlt und ins Stadium der Übersättigung übergeht. Dann wird die Trübe dem Container 2 zugeführt, wo die Abtrennung der Mutterlösung von dem Fertigprodukt erfolgt. Der nach diesem Verfahren erhaltene Ammonsalpeter hat eine Feuchtigkeit über 3%, was die Explosionsgefährlichkeit des Produktionsprozesses ausschließt.

Der Container 2 (Fig. 3) zur Transportierung und Aufbewahrung des Produktes, der gleichzeitig bei den Prozessen der Herstellung des festen Produktes und Zubereitung seiner Lösung benutzt wird, wird von ineinander eingesetzten Behältern 10 und 11 mit einem Spalt zwischen ihnen gebildet, wobei der innere Behälter 10 aus einem porösen Material, z.B. Polypropylen, besteht, während der äussere Behälter 11 aus einem wasserundurchlässigen Material, z.B. Polyäthylen, ausgeführt ist. Der aussere Behälter 11 besitzt Vorrichtungen 12, 13, 14 für den Anschluss von mindestens drei Rohrleitungen.

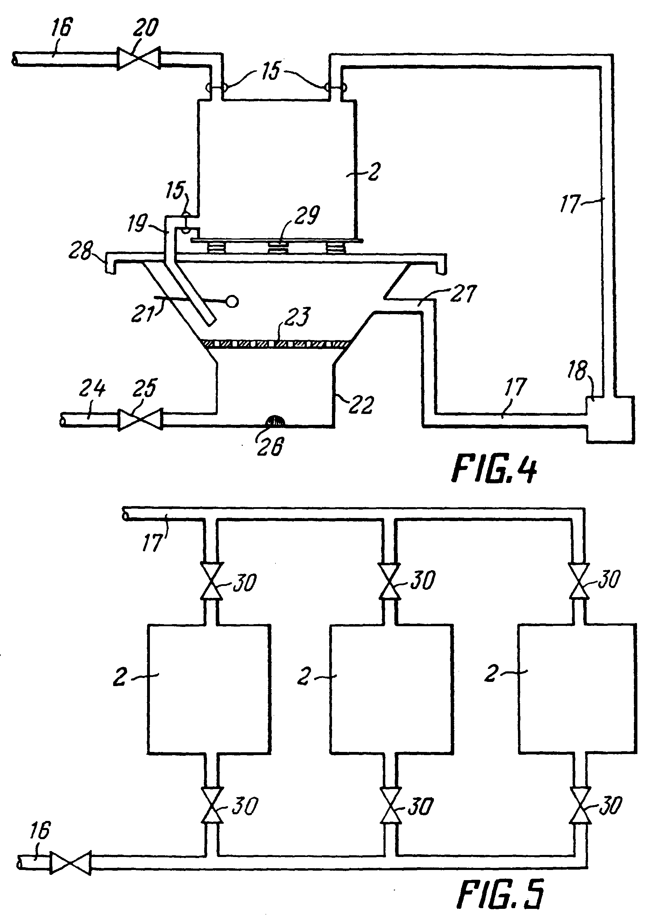

Bei Verwendung des Containers 2 (Fig. 4) als Behälter zum Auflösen von Kristallen wird er über schnellabnehmbare Verschlüsse 15, beispielsweise Nutensteinschlösser oder Schellen, an eine Rohrleitung 16 für die Zuführung des Lösungsmittels, an eine Zirkulationsleitung 17 mit einer Pumpe 18 und an eine Rohrleitung 19 für die Abführung der Lösung angeschlossen. An der Rohrleitung 16 ist ein Absperrventil 20 installiert, das auf einen Füllstandsgeber 21 für die Lösung anspricht, welcher in einem Behälter 22 zur Einstellung der Lösung auf eine vorgegebene Konzentration eingebaut ist. Die Rohrleitung 19 für die Abführung der Lösung ist im Inneren des Behälters 22 mit einem Spalt in bezug auf dessen Wände und über einem Beruhigungsmittel 23 angeordnet. Im unteren Teil steht der Behälter 22 mit einem Ableitstutzen 24 für die fertige Lösung in Verbindung, in welchem ein Ventil 25 installiert ist, das auf ein Signal von einem im Behälter 22 befindlichen Dichtegeber 26 für die Lösung anspricht. Im oberen Teil des Behälters 22 ist in Höhe des Füllstandsgebers 21 für die Lösung eine Abzweigung 27 in die Zirkulationsleitung 17 vorhanden.

In Fig. 4 ist eine der möglichen Varianten der Einrichtung zur Zubereitung der Lösungen von Mineralsalzen und/oder -düngern, gezeigt, bei welcher der Behälter 22 für die Einstellung der Lösung auf eine vorgegebene Konzentration und die übrigen Ausrüstungen stationär ausgeführt sind und der Container 2 auf einem Untersatz 28 aufgestellt ist.

Jedoch kann die Einrichtung nicht nur stationär ausgeführt sein. Sie kann auf beliebigen Transportmitteln, beispielsweise auf Kraftfahrzeugen, Schiffen, Eisenbahnfahrzeugen und anderen Fördermitteln montiert sein. Die Hauptsache dabei ist, dass das Schema der Rohrleitungen 16, 17, 19 erhalten bleibt und der Behälter 22 zur Einstellung der Lösung auf eine vorgegebene Konzentration vorhanden ist, dessen Funktionen praktisch beliebige Behälter, über die sowohl der Produzent als auch der Verbraucher verfügen, beispielsweise Fässer, Silogruben, Zistarnen u.dgl., erfüllen können. Der Behälter kann z.B. aus Metall mit Korrosionsschutzüberzug, aus Plast, aus Beton mit Überzug bestehen und sich auf einem beliebigen Niveau befinden. Unter dem Container 2 ist ein Entleerungsgeber 29 angeordnet.

Das erfindungsgemässe System unterscheidet sich vorteilhaft von den bekannten durch die Möglichkeit, je nach Bedarf der Verbraucher 4 (Fig. 1) ohne wesentliche Änderungen des Prinzipschemas den Prozess der Zubereitung der Lösung von Mineralsalzen und/oder -düngern kontinuierlich auszuführen. Dies wird leicht dadurch erreicht, daß an die Rohrleitung 16 (Fig. 5) zur Zuführung des Lösungsmittels und an die Zirkulationsleitung 17 zugleich mehrere Container 2 angeschlossen werden. Als ausführende Elemente, die den Löseprozess von einem Container 2 zum anderen umschalten, dienen Ventile 30, die vom Geber 29 (Fig. 4) betätigt werden, welcher unter dem Container 2 angeordnet ist und dessen Entleerung signalisiert. Die optimale Anzahl von gleichzeitig verwendeten Containern 2 ist drei. Diese Anzahl entspricht der Berechnung der Lösungszeit und der Zeit für die Aufstellung eines neuen Containers 2.

Die Funktionsweise der erfindungsgemässen Einrichtung zur Zubereitung einer Salz- und/oder einer Düngerlösung ist folgende. Ein Lösungsmittel gelangt über die Rohrleitung 16 (Fig. 4) in den Container 2 und löst das während des Produktionsprozesses in diesen eingefüllte Mineralsalz oder- düngemittel auf. Die Lösung gelangt im Selbstfluss über die Rohrleitung 19 in den Behälter 22 zur Einstellung der Lösung auf eine vorgegebene Konzentration. Da das Ventil 25 geschlossen ist, füllt sich der Behälter 22 bis zum erforderlichen Höhenstand, welcher mit Hilfe des Füllstandsgebers 21 für die Lösung kontrolliert wird. Beim Ansprechen des Gebers 21 wird die Zuführung des Lösungsmittels in den Container 2 mit Hilfe des Ventils 20 selbsttätig abgeschaltet und die Zirkulationspumpe 18 eingeschaltet. Da sich die Abzweigung 27 in die Zirkulationsleitung 17 auf dem Niveau des Gebers 21 befindet, gelangt die Lösung über dieselbe durch die Zirkulationspumpe 18 hindruch in den Container 2 zur weiteren Auflösung des Mineralsalzes und/oder des Mineraldüngers. Während der Zirkulation nimmt die Dichte der Lösung in den unteren Schichten zu, was ein Ansteigen des Höhenstandes der Lösung mit niedriger Konzentration und folglich eine kontinuierliche Zirkulation gewährleistet.

Bei Erreichen einer vorher bestimmten Konzentration gibt der Dichtegeber 26 ein Signal für das Öffnen des Ventils 25 ab, wodurch die Lösung mit der vorgegebenen Konzentration über den Ableitstutzen 24 für die fertige Lösung zum Verbraucher 4 (Fig. 1) gelangt. Da sich der Höhenstand der Lösung gesenkt hat, gibt der Geber 21 (Fig. 4) ein Signal für das Öffnen des Ventils 20 und das Stillsetzen der Pumpe 18 ab, was eine störungsfreie Arbeit der Pumpe 18 sicherstellt. Das Lösungsmittel gelangt über die Rohrleitung 16 in den Container 2, woraus es nach der Auflösung des Salzes und/oder des Düngers über die Rohrleitung 19 in den Behälter 22 zur Eintellung der Lösung auf eine vorgegebene Konzentration eintritt. Bei Verminderung der Konzentration der Lösung in den unteren Schichten des Behälters 22, d.h. auf dem Niveau des Stutzens 24, liefert der Dichtegeber 26 für die Lösung ein Signal für das Schliessen des Ventils 25. Bei Erreichen eines vorgegebenen Höhenstandes der Lösung gibt der Füllstandsgeber 21 für die Lösung ein Signal für das Abschalten der Lösungsmittelzuführung und das Ingangsetzen der Zirkulationspumpe 18 ab, d.h., das System geht in den ursprünglichen Zustand über und die Lösung zirkuliert in der Zirkulationsleitung 17 bis zur Sättigung auf eine vorgegebene Konzentration. Danach wiederholt sich der Zyklus der Auslieferung der fertiger Lösung an den Verbraucher 4 (Fig. 1).

Auf diese Weise lässt sich ein automatisches Umschalten des Löseprozesses von einem Container 2 zum anderen und eine halbautomatische Zuführung (Auswechselung) derselben z.B. mittels eines Motorkarrens oder eines Elektrozugkrans zustandebringen.

Soll der Löseprozess intensiver ablaufen und die Dichte der Lösung höher als 50% sein, wird dem Container 2 ein vorgewärmtes Lösungsmittel zugeführt. So z.B. wird für das Karbamid die Lösungsmitteltemperatur zwischen 20 und 80°C gewählt. Dieses Temperaturintervall ist dadurch bedingt, dass bei einer Temperatur über 80°C der Prozess der Zersetzung von Karbamid vonstatten geht (M.E.Pozin "Technologie von Mineraldüngern", Lehrbuch für Hochschulen, 1983, Knimia /Leningrad/, S. 228).

Mit der Temperaturerhöhung nimmt die Konzentration der Lösung zu. In einem Buch (V.A.Klevka, M.N. Polyakov, L.Z.Arsenieva "Technologie von Stickstoffdüngern", 1956, Gosudarstvennoe nauchno-tekhnicheskoe izdatelstvo khimicheskoi literatury /Moskau/, S. 266) wird eine Tabelle angeführt, aus welcher eine Tendenz zum Konzentrationswachstum einer Karbamidlösung mit der Temperatursteigerung derselben erkennbar ist: bei t = 20°C beträgt die Konzentration 51,83%, bei t = 30°C - 57,18%, bei t = 70°C - 76,28%, wobei die Lösegeschwindigkeit ebenfalls zunimmt (R.Rad, T.Shervud "Eigenschaften von Gasen und Flüssigkeiten" (Bestimmung und Korrelation) 1974, Khimia /Leningradskoe otdelenie/, SS. 598-599).

Bei Verwendung dieser Einrichtung für die Auflösung von kristallinem Karbamid im hydroverdichteten Zustand mit einer Dichte von 1 g/cm³ und einer Masse von 1 t, eingebracht in den Behälter 10 (Fig. 3) aus Propylen des Containers 2 mit dem äusseren Behälter 11 aus Polyäthylen, begann die 50%-ige Karbamidlösung aus dem Stutzen 24 (Fig. 4) 5 Minuten nach der Lösungsmittelzuführung auszutreten, wobei als Lösungsmittel Wasser bei der Temperatur 20°C benutzt wurde. Das ganze in den Container 2 eingebrachte Karbamid wurde im Laufe von 15 Minuten aufgelöst. Bei der Auflösung von in den Container 2 eingebrachter Kalimagnesia begann eine 40%-ige Kalimagnesia-Lösung nach fünf Minuten auszutreten, und dei ganze Löseprozess wurde nach 20 Minuten abgeschlossen.

Das erfindungsgemässe Verfahren und das erfindungsgemässe System gestatten es also, ein poröses kristallines Produkt unmittelbar aus der Trübe bei Abführung der Mutterlösung zu erhalten.

Die vorliegende Erfindung gestattet es, ein Endprodukt mit einem bedeutend verminderten Gehalt an schädlichen Beimengungen (etwa um das 7- bis 8 fache) zu erhalten, da Stadien wegfallen, den Gehalt erhöhen.

Ein Vorteil des erfindungsgemässen Systems liegt auch darin, daß umweltfreundliche Mineralsalze und/oder -dünger unter minimalem produktionsbedingtem Energieaufwand erhalten werden. Das erfindungsgemäße System löst eines der wichtigen Probleme - Verluste bei der Transportierung und Aufbewahrung und beim Verbrauch von Mineralsalzen und/oder -düngern.

Die vorliegende Erfindung ermöglicht es, das aktuelle Problem der operativen Verbindung zwischen dem Produzenten und dem Verbraucher unter Erweisung von Diensleistungen für den Verbraucher in bezug auf die Zubereitung von Lösungen der erforderlichen Konzentrationen und Dosierungen und unter Lösung von ökologischen und ökonomischen Problemen zu lösen.

Der erfindungsgemäße Containers 2 (Fig. 3) wird von zwei ineinander eingesetzten Behältern 10, 11 gebildet: der innere poröse Behälter 10 erfüllt während des Löseprozesses die Funktion eines Filters, während der äussere zur Isolation dient. Ausserdem besitzt der äussere Behälter 11 die Vorrichtungen 12, 13, 14 für den Anschluss an Rohrleitungen, wenn die Vorgänge der Beschickung des Containers 2 und der Auflösung von Mineralsalzen und/oder -düngern vonstatten gehen.

Der Vorteil dieser Konstruktion wird durch die Vielseitigkeit der durch diesen Container 2 zu erfüllenden Funktionen bestimmt: er Kann verwendet werden im Produktionsprozess als Filter zur Absonderung von Kristallen, im Prozess der Transportierung und Aufbewahrung als Behälter für die Aufbewahrung und den Schutz vor atmosphärischen und anderen Einwirkungen, im Löseprozess unmittelbar als Behälter für die Auflösung.

Die Einrichtung erlaubt es, qualitätsgerechte Lösungen einer vorgegebenen Konzentration ohne Stillstände für den Eintrag des Ausgangsrohstoffes und ohne schwere Handarbeit unter hoher Effektivität und Geschwindigkeit der Zubereitung von Lösungen herzustellen. Neben einer Beschleunigung des Prozesses der Herstellung fertiger Lösungen mit vorgegebenen Konzentrationen gewährleistet das erfindungsgemässe System eine wesentliche Verringerung der Verluste des Ausgangsmaterials dadurch, daß die Mineralsalze und/oder -dünger im Prozess ihrer Produktion in die Container 2 eingebracht werden und sich von diesem Augenblick an bis zum Prozess der vollständigen Auflösung in ein und demselben Container 2 befinden, welcher eben als Behälter für die Auflösung verwendet wird. Hiermit ist auch eine andere wichtige Besonderheit des erfindungsgemässen Systems unmittelbar verbunden - das System schliesst die Arbeit mit staubhaltigen Produkten aus, wodurch auch die Produktion selbst umweltfreundlich und für das Bedienungspersonal unschädlich wird.

Das erfindungsgemässe System gestattet es:
- den technologischen Zyklus der Produktion von Mineralsalzen und/oder -düngern durch Ausschluss der Behandlung mit einem Verbackungsverhinderungsmittel, der Granulation und der Trocknung zu reduzieren sowie Selbstkosten um 20 bis 25% zu senken;
- die Effektivität des Transportsystems durch Anwendung von spezialisierten Containern beträchtlich zu erhöhen, die sich durch einfache Konstruktion und niedrige Selbstkosten auszeichnen;
- eine neue Technologie der Anwendung von Düngemitteln einzuführen, die Bedingungen für die Herstellung von umweltfreundlichen Produkten gewährleistet;
- die Verluste von Minealdüngern bei der Transportierung und Aufbewahrung durch Verbesserung des Schemas Produzent
- Verbraucher zu vermeiden;
- die apparative Gestaltung zu vereinfachen und aus dem technologischen Prozess Hilfsarbeitsgänge auszuschliessen, was es ermöglicht, spezifische Investitionen nahezu um das Dreifache zu senken.

Die vorliegende Erfindung kann zur Herstellung und Versorgung von Verbrauchern mit Lösungen von Mineralsalzen und/oder -düngern unterschiedlicher Konzentrationen und verschiedener Zusammensetzungen angewendet werden, welche in der chemischen Industrie, Leichtindustrie, Lebensmittelindustrie, in der medizinischen Industrie und in der Landwirtschaft zur Verwendung kommen.

## Patentansprüche

1. Verfahren zur Herstellung einer Lösung aus einem Mineralsalz, einem Mineraldünger oder einer Mischung daraus, bei dem
- durch Synthese des Mineralsalzes, des Mineraldüngers oder der Mischung daraus ein Zwischenprodukt in Form eine Trübe erhalten wird,
- durch Einfüllen der Trübe in einen porösen und Kristalle abtrennenden Behälter bei einer der Kristallisationstemperatur des Zwischenprodukts entsprechenden Temperatur hydroverdichtete Kristalle gebildet werden, wobei die Mutterlösung aus dem Behälter austritt,
- die hydroverdichteten Kristalle in dem Behälter transportiert und aufbewahrt werden, und
- die Lösung des Mineralsalzes, des Mineraldüngers oder der Mischung daraus unmittelbar vor ihrer Verwendung aus den hydroverdichteten Kristallen zubereitet wird.

2. System zur Herstellung einer Lösung eines Mineralsalzes, eines Mineraldüngers oder einer Mischung daraus, mit
- einem Reaktor (1), in dem durch Synthese des Mineralsalzes, des Mineraldüngers oder der Mischung daraus ein Zwischenprodukt in Form eine Trübe erhalten wird,
- einem Container (2) zum Transport und zur Aufbewahrung des Mineralsalzes, des Mineraldüngers oder der Mischung daraus ,
- einer Umladeeinrichtung (6) und
- einer Einrichtung (7) zur Zubereitung einer Lösung des Mineralsalzes, des Mineraldüngers oder der Mischung daraus,
dadurch gekennzeichnet, daß
- der Container (2) zum Transport und zur Aufbewahrung von einem äußeren Behälter (11) aus wasserundurchlässigem Material und einem inneren Behälter (10) aus porösen, Kristalle abtrennenden Material gebildet wird, wobei der innere Behälter (10) so in den äußeren Behälter (11) eingesetzt ist, daß ein Spalt zwischen diesen vorhanden ist, und Anschlußvorrichtungen (12, 13, 14) für wenigstens drei Rohrleitungen (16, 17, 19) vorgesehen sind.

3. System nach Anspruch 2, dadurch gekennzeichnet, daß die Einrichtung (7) zur Zubereitung einer Lösung des Mineralsalzes, des Mineraldüngers oder der Mischung daraus
- eine Zirkulationsleitung (17) und eine Abführrohrleitung (19) für die Lösung aufweist, die über schnellabnehmbare Verschlüsse (15) mit dem Container (2) verbunden werden können,
wobei
- die Zirkulationsleitung (17) und die Abführrohrleitung (19) mit einem Einstellungsbehälter (22) zur Einstellung einer vorgegebenen Konzentration der Lösung in Verbindung stehen,
- eine Abzweigung (27) des Einstellungsbehälters (22) zur Zirkulationsleitung (17) auf Höhe der Anbringung eines im Inneren des Einstellungsbehälters (22) angeordneten Füllstandsgebers (21) liegt,
- ein Ableitstutzen (24) für fertige Lösung in der Nähe des Bodens des Einstellungsbehälters (22) mit diesem in Verbindung steht, und
- die Abführungsrohrleitung (19) oberhalb einer Beruhigungseinrichtung so in dem Einstellungsbehälter (22) angeordnet ist, daß ein Spalt zwischen ihr und der Einstellungsbehälterwandung vorhanden ist.

4. Container zur Verwendung in dem Verfahren nach Anspruch 1, gekennzeichnet durch einen äußeren Behälter (11) aus wasserundurchlässigem Material und einen inneren Behälter (10) aus porösen, Kristalle abtrennenden Material, wobei der innere Behälter (10) so in den äußeren Behälter (11) eingesetzt ist, daß ein Spalt zwischen diesen vorhanden ist, und Anschlußvorrichtungen (12, 13, 14) für wenigstens drei Rohrleitungen (16, 17, 19) vorgesehen sind.

5. Container nach Anspruch 4, dadurch gekennzeichnet, daß der äußere Behälter (11) aus Polyäthylen und der innere Behälter (10) aus Polypropylen besteht.

## Claims

1. A method of preparing a solution from a mineral salt, a mineral fertilizer or a mixture thereof, in which
- by synthesis of the mineral salt, of the mineral fertiliser or the mixture thereof an intermediate product is obtained in the form of a slurry,
- by feeding the slurry into a porous vessel which separates crystals at a temperature corresponding to the crystallization temperature of the intermediate product hydrocompressed crystals are formed, wherein the mother solution leaves the vessel,
- the hydrocompressed crystals are conveyed and stored in the vessel, and
- the solution of the mineral salt, the mineral fertilizer or the mixture thereof is prepared from the hydrocompressed crystals immediately before its use.

2. A system for preparing a solution of a mineral salt, a mineral fertilizer or a mixture thereof, with
- a reactor (1), in which by synthesis of the mineral salt, of the mineral fertilizer or the mixture thereof an intermediate product is obtained in the form of a slurry,
- a container (2) for the conveyance and storage of the mineral salt, the mineral fertilizer or the mixture thereof,
- a transfer means (6) and
- a means (7) for preparing a solution of a mineral salt, a mineral fertilizer or a mixture thereof,
characterised in that
- the container (2) for the conveyance and storage is formed by an outer vessel (11) of water-impermeable material and by an inner vessel (10) of porous material which separates crystals, wherein the inner vessel (10) is inserted into the outer vessel (11) in such a way that a gap is present between them, and connector means (12,13,14) are provided for at least three pipelines (16,17,19).

3. A system according to Claim 2, characterised in that the means (7) for preparing a solution of the mineral salt, the mineral fertiliser or the mixture thereof,
- has a circulation duct (17) and a discharge pipe (19) for the solution, which can be connected with the container (2) via rapidly detachable closures (15),
wherein
- the circulation duct (17) and the discharge pipe (19) are in communication with an adjusting vessel (22) for adjusting a predetermined concentration of the solution,
- a branch (27) of the adjusting vessel (22) to the circulation duct (17) is disposed at the mounting level of a filling level sensor (21) disposed inside the adjusting vessel (22),
- a drain connector (24) for the finished solution in the vicinity of the bottom of the adjusting vessel (22) is in communication therewith, and
- the discharge pipe (19) is so arranged in the adjusting vessel (22) above a stabilising means that a gap is present between said vessel and the wall of the adjusting vessel.

4. A container for use in the method according to Claim 1, characterised by an outer vessel (11) of water-impermeable material and an inner vessel (10) of porous material which separates crystals, wherein the inner vessel (10) is inserted into the outer vessel (11) in such a way that a gap is present between them, and connector means (12,13,14) are provided for at least three pipelines (16,17,19).

5. A container according to Claim 4, characterised in that the outer vessel (11) consists of polyethylene and the inner vessel (10) consists of polypropylene.

## Revendications

1. Procédé pour la préparation d'une solution constituée par un sel minéral, par un engrais minéral ou par un mélange de ceux-ci, dans lequel
- par synthèse du sel minéral, de l'engrais minéral ou de leur mélange, on obtient un produit intermédiaire sous la forme d'une pâte épaisse,
- par remplissage d'un récipient poreux et de séparation de cristaux, avec la pâte épaisse, à une température correspondant à la température de cristallisation du produit intermédiaire, on obtient des cristaux soumis à une hydrocompression, la liqueur-mère s'évacuant du récipient,
- on transporte et on entrepose dans le récipient les cristaux soumis à une hydrocompression, et
- on prépare la solution du sel minéral, de l'engrais minéral ou de leur mélange, immédiatement avant son utilisation, à partir des cristaux soumis à une hydrocompression.

2. Système pour la préparation d'une solution d'un sel minéral, d'un engrais minéral ou d'un mélange de ceux-ci, comprenant
- un réacteur (1) dans lequel on obtient par synthèse du sel minéral, de l'engrais minéral ou de leur mélange, un produit intermédiaire sous la forme d'une pâte épaisse,
- un récipient (2) pour le transport et pour l'entreposage du sel minéral, de l'engrais minéral ou de leur mélange,
- un dispositif de transvasement (6), et
- un dispositif (7) pour préparer une solution du sel minéral, de l'engrais minéral ou de leur mélange,
caractérisé en ce que
- le récipient (2) pour le transport et pour l'entreposage est formé par un récipient externe (11) constitué d'une matière imperméable à l'eau et par un récipient interne (10) constitué d'une matière poreuse séparant les cristaux, dans lequel le récipient interne (10) est emboîté dans le récipient externe (11) de telle sorte que l'on ménage un espace libre entre eux, des dispositifs de raccordement (12, 13, 14) étant prévus pour au moins trois conduits tubulaires (16, 17, 19).

3. Système selon la revendication 2, caractérisé en ce que le dispositif (7) pour la préparation d'une solution du sel minéral, de l'engrais minéral ou de leur mélange
- présente un conduit de circulation (17) et un conduit tubulaire d'évacuation (19) pour la solution, qui peuvent être reliés au récipient (2) via des raccords (15) aptes à être rapidement retirés,
dans lequel
- le conduit de circulation (17) et le conduit tubulaire d'évacuation (19) se trouvent en liaison avec un récipient de réglage (22) pour le réglage d'une concentration prédéfinie de la solution,
- une dérivation (27) du récipient de réglage (22) menant au conduit de circulation (17) est montée à hauteur de l'installation d'un indicateur de niveau (21) disposé à l'intérieur du récipient de réglage (22),
- une tubulure de dérivation (24) pour la solution prête à l'emploi est reliée, à proximité du fond du récipient de réglage (22), avec ce dernier, et
- le conduit tubulaire d'évacuation (19) est disposé au-dessus d'un dispositif de stabilisation, dans le récipient de réglage (22), de telle sorte que l'on ménage un espace libre entre lui et la paroi du récipient de réglage.

4. Récipient à des fins d'utilisation dans un procédé selon la revendication 1, caractérisé par un récipient externe (11) constitué d'une matière imperméable à l'eau et par un récipient interne (10) constitué d'une matière poreuse séparant les cristaux, dans lequel le récipient interne (10) est emboîté dans le récipient externe (11) de telle sorte que l'on ménage un espace libre entre eux, des dispositifs de raccordement (12, 13, 14) étant prévus pour au moins trois conduits tubulaires (16, 17, 19).

5. Récipient selon la revendication 4, caractérisé en ce que le récipient externe (11) est constitué de polyéthylène et le récipient interne (10) est constitué de polypropylène.
